# EUROPEAN PATENT APPLICATION

(11) **EP 3 142 061 A1**
(43) Date of publication of application: **15.03.2017**
(21) Application number: 16187632.1
(22) Date of filing: 07.09.2016
(51) Int. Cl.: G06Q 30/04, G06Q 40/00

(54) **TAX EXEMPTION PROCESSING SYSTEM, MANAGEMENT SERVER AND SETTLEMENT APPARATUS**

(30) Priority: 14.09.2015 JP 2015180742
(71) Applicant: Toshiba TEC Kabushiki Kaisha, Tokyo 141-0032 (JP)
(72) Inventor: YAMAGUCHI, Mitsuru, Shinagawa-ku, Tokyo 141-8562 (JP); NAKAZONO, Takeshi, Shinagawa-ku, Tokyo 141-8562 (JP)
(74) Representative: Takeuchi, Maya

(57) **Abstract**

A tax exemption processing system comprises a reception device, a settlement apparatus, a checkout device and a storage device. The reception device receives information recorded in a certificate for certifying a purchaser who is subject to a tax exemption and generates a tax exemption reception data in which the information recorded in the certificate is associated with a unique purchaser code for identifying the purchaser. The checkout device generates a tax exemption purchase data in which information relating to sales of a commodity purchased by the purchaser is associated with the purchaser code of the purchaser. The settlement apparatus receives the purchaser code of the purchaser who receives a refund on the commodity purchased. The settlement apparatus accesses a storage device to determine whether or not a purchase total amount of a taxable commodity purchased by the purchaser identified by the purchaser code is subject to a tax exemption on the basis of the information relating to the sales of the commodity stored in the purchaser data file in which the received purchaser code is set.

## Description

### FIELD

Embodiments described herein relate generally to a tax exemption processing system suitable for a tax exemption system for a nonresident.

### BACKGROUND

In a case in which a manager who runs a general consumption tax exemption store sells a commodity to a nonresident such as a foreign tourist with a certain method, commodity taxes (consumption tax, liquor tax and the like) levied on the commodity is exempted. Recently, even in a specific commercial facility, such as a shopping street, a shopping center, a tenant building and the like, instead of the manager, a third party who is an approved or admitted tax exemption procedure business provider can carry out procedures of a tax exemption measure relating to a sales of commodities to the nonresident in a procedure consignment type tax-free store by setting a tax exemption procedure counter in the facility.

In such a specific commercial facility, a purchaser who is a nonresident purchases a commodity at a price including an applicable tax at each tax-free store inside the facility. Then, if the shopping in the facility is finished, the purchaser goes to the tax exemption procedure counter to carry out the procedures of the tax exemption measure to receive a refund of the applicable tax amount.

Specifically, the purchaser presents a receipt on which details of the purchased commodities are described and a certificate like a passport for certifying that he or she is a nonresident to the admitted tax exemption procedure business provider. The admitted tax exemption procedure business provider assorts the commodities (tax exemption applicable item) purchased by the purchaser into consumables and general goods other than the consumables on the basis of information of the receipt, totals tax excluded prices respectively for the consumables and the general goods and determines whether or not each assorted group is subject to the tax exemption. Then, if the group is subject to the tax exemption, the admitted tax exemption procedure business provider creates documents such as a purchase record slip, a purchaser written oath and a consumables warning label required for a tax exemption procedure.

The tax-free store has a liability to preserve the purchaser written oath for seven years from the day on which two months elapses from the next day of the last day of the taxable period to which the day on which the tax exemption sales is carried out by the tax-free store belongs, the purchaser written oath is created for each tax-free store at which the purchaser purchases the commodity.

The admitted tax exemption procedure business provider pastes the purchase record slip on the passport and then returns the passport to the purchaser. Further, in a case in which contents in a case in which the consumables are packed cannot be grasped, the admitted tax exemption procedure business provider pastes a details of the contents and a label for calling attention such as a note "do not open the case until departure from the country" and then hands over the case to the purchaser. Furthermore, the admitted tax exemption procedure business provider refunds a taxable amount to the purchaser, receives a signature (sign) to each purchaser written oath from the purchaser and collects each purchaser written oath to which the sign is completed. Through the above, the procedures of the tax exemption measure are terminated. The collected purchaser written oaths are stored at each tax-free store.

In this way, the admitted tax exemption procedure business provider can collectively carry out the procedures of the tax exemption measure of the tax-free store inside the specific commercial facility by arranging the tax exemption procedure counter in the specific commercial facility. However, in an existing system, there is a problem that the procedures of the tax exemption measure carried out at the tax exemption procedure counter are extremely troublesome and thus the burden of an operator is large, and, in addition, it takes time to complete the procedures.

To solve such problems, there is provided a tax exemption processing system, comprising: a reception device, a settlement apparatus, a checkout device and a storage device, wherein
the reception device includes:
a first reception module configured to receive information recorded in a certificate for certifying that a purchaser who purchases commodity is subject to a tax exemption;
a first generation module configured to generate a tax exemption reception data in which the information recorded in the certificate received by the first receiving module is associated with a purchaser code for identifying the purchaser; and
a first sending module configured to send the tax exemption reception data to the storage device;
the checkout device includes:
   a second reception module configured to receive the purchaser code of the purchaser;
   a second generation module configured to generate a tax exemption purchase data in which information relating to sales of the commodity purchased by the purchaser is associated with the purchaser code received by the second reception module; and
   a second sending module configured to send the tax exemption purchase data to the storage device;
   the storage device includes:
      a first storage module configured to create a purchaser data file in which the purchaser code contained in the tax exemption reception data is set in response to the reception of the tax exemption reception data to store the information recorded in the certificate contained in the tax exemption reception data in the purchaser data file; and
      a second storage module configured to store the information relating to the sales of the commodity contained in the tax exemption purchase data in the purchaser data file in which the purchaser code contained in the tax exemption purchase data is set in response to the reception of the tax exemption purchase data; and
      the settlement apparatus includes:
         a third reception module configured to receive the purchaser code of the purchaser who receives a refund on purchase of the commodity;
         a determination module configured to access the storage device to determine whether or not a purchase total amount of taxable commodity purchased by the purchaser identified with the purchaser code is subject to the tax exemption on the basis of the information relating to the sales of the commodity stored in the purchaser data file in which the purchaser code received by the third reception module is set;
         a display module configured to display an amount of tax levied on the taxable commodity on a display device as an amount of refund if the determination module determines that the purchase total amount is subject to the tax exemption; and
         a creation module configured to create a document necessary for a tax exemption measure on the basis of the information recorded in the certificate stored in the purchaser data file in which the purchaser code received by the third reception module is set if the determination module determines that the purchase total amount is subject to the tax exemption.

Preferably, the reception device further includes a fourth reception module configured to receive the purchaser code recorded in a card medium; and
the first generation module generates a tax exemption reception data in which the information recorded in the certificate received by the first reception module is associated with the purchaser code received by the fourth reception module.

Preferably still, the reception device further includes a third generation module configured to generate the purchaser code according to the information recorded in the certificate received by the first reception module and a first issuing module configured to issue a sheet on which the purchaser code generated by the third generation module is printed.

Preferably yet, the settlement apparatus further includes an instruction module configured to instruct the money dispensing machine to dispense cash equivalent to the amount of refund.

Suitably, the settlement apparatus further includes a second issuing module configured to issue a medium on which information for instructing the money dispensing machine to dispense the cash equivalent to the amount of refund is recorded.

The invention also relates to a management server, comprising:
a first storage module configured to, in response to the reception of a tax exemption reception data in which information recorded in a certificate for certifying that a purchaser who purchases a commodity is subject to a tax exemption is associated with a unique purchaser code for identifying the purchaser, create a purchaser data file in which the purchaser code contained in the tax exemption reception data is set to store information, recorded in the certificate, which is contained in the tax exemption reception data in the purchaser data file; and
a second storage module configured to, in response to the reception of a tax exemption purchase data in which information relating to sales of the commodity purchased by the purchaser is associated with the purchaser code of the purchaser, store the information, relating to the sales of the commodity, which is contained in the tax exemption purchase data in the purchaser data file in which the purchaser code contained in the tax exemption purchase data is set.

The invention further relates to a settlement apparatus, comprising:
a communication module configured to communicate with a management server that includes a first storage module configured to, in response to the reception of a tax exemption reception data in which information recorded in a certificate for certifying that a purchaser who purchases a commodity is subject to a tax exemption is associated with a unique purchaser code for identifying the purchaser, create a purchaser data file in which the purchaser code contained in the tax exemption reception data is set to store information, recorded in the certificate, which is contained in the tax exemption reception data in the purchaser data file, and a second storage module configured to, in response to the reception of a tax exemption purchase data in which information relating to sales of the commodity purchased by the purchaser is associated with the purchaser code of the purchaser, store the information, relating to the sales of the commodity, which is contained in the tax exemption purchase data in the purchaser data file in which the purchaser code contained in the tax exemption purchase data is set;
a reception module configured to receive the purchaser code of the purchaser who receives a refund on the commodity purchased;
a determination module configured to determine whether or not a purchase total amount of a taxable commodity purchased by the purchaser identified by the purchaser code is subject to a tax exemption on the basis of the information relating to the sales of the commodity stored in the purchaser data file in which the purchaser code received by the reception module is set;
a display module configured to display an amount of tax levied on the taxable commodity on a display device as an amount of refund if the determination module determines that the purchase total amount is subject to the tax exemption; and
a creation module configured to create a document necessary for a tax exemption measure on the basis of the information, recorded in the certificate, which is stored in the purchaser data file in which the purchaser code received by the third reception module is set if the determination module determines that the purchase total amount is subject to the tax exemption.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic view illustrating the whole configuration of a tax exemption processing system according to an embodiment;
Fig. 2 is a block diagram illustrating the circuit configuration of main sections of a POS terminal contained in the tax exemption processing system in Fig. 1;
Fig. 3 is a block diagram illustrating the circuit configuration of main sections of a reception terminal contained in the tax exemption processing system in Fig. 1;
Fig. 4 is a block diagram illustrating the circuit configuration of main sections of a settlement terminal contained in the tax exemption processing system in Fig. 1;
Fig. 5 is a block diagram illustrating the circuit configuration of main sections of a management server contained in the tax exemption processing system in Fig. 1;
Fig. 6 is a schematic view illustrating the data structure of a tax exemption commodity database stored in the management server in Fig. 5;
Fig. 7 is a schematic view illustrating the data structure of a purchaser data file stored in the management server in Fig. 5;
Fig. 8 is a schematic view illustrating the data structure of a purchase record stored in the purchaser data file in Fig. 7;
Fig. 9 is a flowchart illustrating main procedures of an information processing carried out by a CPU of the reception terminal according to a control program;
Fig. 10 is a flowchart illustrating main procedures of an information processing carried out by a CPU of the POS terminal according to a control program;
Fig. 11 is a flowchart illustrating main procedures of an information processing carried out by a CPU of the settlement terminal according to a control program;
Fig. 12 is a flowchart illustrating main procedures of an information processing carried out by a CPU of the management server at the time of receiving a tax exemption reception data;
Fig. 13 is a flowchart illustrating main procedures of an information processing carried out by the CPU of the management server at the time of receiving a tax exemption purchase data;
Fig. 14 is a flowchart illustrating main procedures of an information processing carried out by the CPU of the management server at the time of receiving a tax exemption settlement data; and
Fig. 15 is a schematic view illustrating an example of an issuance of a refund receipt.

### DETAILED DESCRIPTION

In accordance with an embodiment, a tax exemption processing system comprises a reception device, a settlement apparatus, a checkout device and a storage device. The reception device includes a first reception module configured to receive information recorded in a certificate, a first generation module configured to generate a tax exemption reception data and a first sending module configured to send the tax exemption reception data to the storage device. The certificate is, for example, a passport for certifying that a purchaser who purchases a commodity is subject to a tax exemption. The tax exemption reception data contains the information, recorded in the certificate, which is received by the first reception module in association with a purchaser code for identifying the purchaser.

The checkout device includes a second reception module configured to receive the purchaser code of the purchaser, a second generation module configured to generate a tax exemption item purchase data and a second sending module configured to send the tax exemption item purchase data to the storage device. The tax exemption item purchase data contains the information relating to sales of the commodity purchased by the purchaser in association with the purchaser code received by the second reception module.

The storage device includes a first storage module configured to create a purchaser data file in which the purchaser code contained in the tax exemption reception data is set in response to the reception of the tax exemption reception data to store the information, recorded in the certificate, which is contained in the tax exemption reception data in the purchaser data file and a second storage module configured to store the information relating to the sales of the commodity contained in the tax exemption item purchase data in the purchaser data file in which the purchaser code contained in the tax exemption item purchase data is set in response to the reception of the tax exemption purchase data.

The settlement apparatus includes a third reception module configured to receive the purchaser code of the purchaser who receives a refund on the commodity purchased, a determination module, a display module and a creation module. The determination module accesses the storage device to determine whether or not a purchase total amount of a taxable commodity purchased by the purchaser identified by the purchaser code is subject to a tax exemption on the basis of the information relating to the sales of the commodity stored in the purchaser data file in which the purchaser code received by the third reception module is set. If it is determined that the purchase total amount is subject to the tax exemption, the display module displays amount of tax levied on the taxable commodity on a display device as an amount of refund. Further, if it is determined that the purchase total amount is subject to the tax exemption, the creation module creates a document necessary for a tax exemption measure on the basis of the information, recorded in the certificate, which is stored in the purchaser data file in which the purchaser code received by the third reception module is set.

Hereinafter, the embodiment of the tax exemption processing system which can simplify procedures of the tax exemption measure carried out at a tax exemption procedure counter is described with reference to the accompanying drawings.

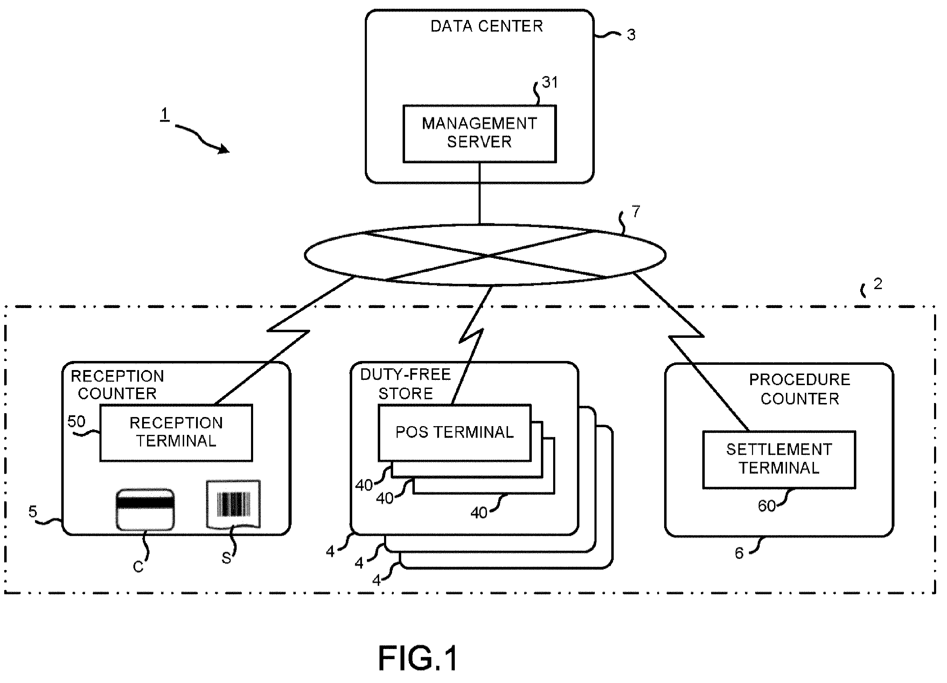

Fig. 1 is a schematic view illustrating the whole configuration of a tax exemption processing system 1. The tax exemption processing system 1 is constituted between a specific commercial facility 2(hereinafter, referred to as a facility 2) to which a procedure consignment type tax exemption system is applied and a data center 3 managed by an admitted tax exemption procedure business provider of the facility 2 or a corporate entity that receives consignment from the business provider.

The facility 2 is an aggregate of stores such as a shopping street, a shopping center, a tenant building and the like. Each store is approved by a ministry concerned as a procedure consignment type consumption tax exemption store 4 (hereinafter, referred to as a tax-free store 4). In each tax-free store 4, well-known POS (Point Of Sales) terminals 40 each operates as a checkout apparatus. The number of the POS terminals 40 in each store is not specifically limited. Further, the facility 2 may be a general consumption tax exemption store, that is, a tax-free store constituted by only one store.

In the facility 2, a tax exemption reception counter 5 (hereinafter, referred to as a reception counter 5) and a tax exemption procedure counter 6 (hereinafter, referred to as a procedure counter 6) managed by the admitted tax exemption procedure business provider are arranged. The reception counter 5 and the procedure counter 6 may be arranged at different locations in the facility 2 or the same location therein.

The reception counter 5 is a place at which a nonresident such as a foreign tourist receives an issuance of a tax exemption card C or a tax exemption sheet S necessary for a transaction of commodities with the tax exemption before the nonresident does some shopping in the facility 2. At the reception counter 5, a reception terminal 50 for issuing the tax exemption card C or the tax exemption sheet S operates. The reception terminal 50 is a form of an information processing apparatus functioning as a reception device. The tax exemption card C is a card medium (a magnetic card, an IC card and the like) capable of holding information magnetically or electrically. The tax exemption sheet S is issued by printing required items on a receipt paper, for example.

The procedure counter 6 is a place at which the nonresident who goes shopping at the tax-free store 4 in the facility 2 carries out the procedures of the tax exemption measure. Jobs of the procedure include a refund job of commodity tax (consumption tax, liquor tax and the like) paid for the commodities purchased by the nonresident at the tax-free store 4, an issuance job of documents such as a purchaser written oath, a purchase record slip and a consumables warning label that are necessary for the tax exemption measure and a collection job of the purchaser written oath. At the procedure counter 6, the settlement terminal 60 operates. The settlement terminal 60 is a form of the information processing apparatus functioning as a settlement apparatus.

The data center 3 is arranged in at least one facility 2 to manage data relating to the procedures of the tax exemption measure carried out in the facility 2 and keep data processed through the procedures of the tax exemption measure. One data center may be commonly used for a plurality of facilities 2 to manage the data relating to the procedures of the tax exemption measure carried out in the plural facilities 2 and keep the data processed through the procedures of the tax exemption measure. In the data center 3, a management server 31 operates to manage the data relating to the procedures of the tax exemption measure and the data processed through the procedures of the tax exemption measure.

In Fig. 1, the management server 31 is arranged in the data center 3; however, the management server 31 may be arranged in the facility 2 and connected with a network to manage data.

The tax exemption processing system 1 contains a computer network 7 (hereinafter, referred to as a network 7) such as an Internet. Then, the tax exemption processing system 1 is constructed by connecting the management server 31 in the data center 3 with each of the POS terminal 40, the reception terminal 50 and the settlement terminal 60 in the facility 2 via the network 7 in a mutual communication.

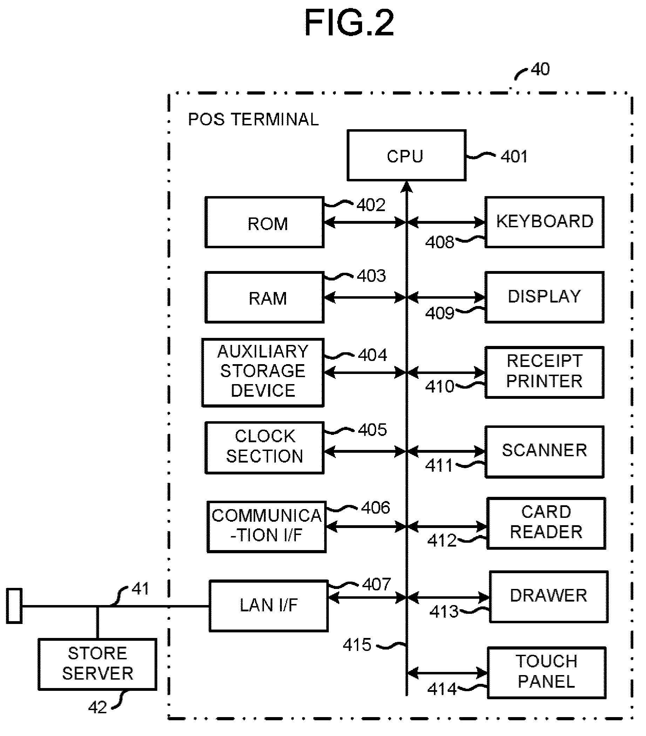

Fig. 2 is a block diagram illustrating the circuit configuration of main sections of the POS terminal 40. The POS terminal 40 is provided with a CPU (Central Processing Unit) 401, a ROM (Read Only Memory) 402, a RAM (Random Access Memory) 403, an auxiliary storage device 404, a clock section 405, a communication interface 406, an LAN interface 407, a keyboard 408, a display 409, a receipt printer 410, a scanner 411, a card reader 412, a drawer 413 and a touch panel 414. In the POS terminal 40, the CPU 401 is connected with the ROM 402, the RAM 403, the auxiliary storage device 404, the clock section 405, the communication interface 406, the LAN interface 407, the keyboard 408, the display 409, the receipt printer 410, the scanner 411, the card reader 412, the drawer 413 and the touch panel 414 directly through a system transmission path 415 such as an address bus line, a data bus line, a control signal line and the like or indirectly through an input/output circuit.

The POS terminal 40 constitutes a computer with the CPU 401, the ROM 402, the RAM 403 and the auxiliary storage device 404 and the system transmission path 415 for connecting them.

The CPU 401 acts as the main unit of the computer. The CPU 401 controls each section for realizing various functions as the POS terminal 40 according to an operating system and application programs.

The ROM 402 acts as the main memory unit of the computer. The ROM 402 stores the foregoing operating system and application programs. The ROM 402 also stores data required for execution of a processing by the CPU 401 to control each section.

The RAM 403 also acts as the main memory unit of the computer. The RAM 403 stores data required to carry out the processing by the CPU 401. Further, the RAM 403 is also used as a working area in which information is properly rewritten by the CPU 401.

The auxiliary storage device 404 acts as an auxiliary memory unit of the computer. The auxiliary storage device 404 is, for example, an EEPROM (Electric Erasable Programmable Read-Only Memory), an HDD (Hard Disc Drive), or an SSD (Solid State Drive). The auxiliary storage device 404 stores data used by the CPU 401 which carries out various processing and data generated through the processing carried out by the CPU 401. The auxiliary storage device 404 may also store the foregoing application programs.

The clock section 405 functions as a time information source of the POS terminal 40. The CPU 401 clocks current date and time on the basis of time information counted by the clock section 405.

The communication interface 406 is connected with the network 7. The communication interface 406 carries out a data communication with the management server 31 of the data center 3 according to a preset protocol via the network 7.

The LAN interface 407 is connected with an LAN 41 formed in the store. The LAN 41 may be a wired LAN or a wireless LAN. The LAN 41 is connected with a store server 42 for managing a commodity database in which various data relating to commodities (containing non-taxable commodities and taxable commodities) sold in the store is stored in addition to the POS terminal 40. The LAN interface 407 carries out a data communication with the store server 42 according to the preset protocol via the LAN 41.

The keyboard 408 is a dedicated input device equipped with various function keys such as a multiplication key, a subtotal key and a closing key in addition to numeric keys for inputting numerical values of points and amount. Necessary functions in the POS terminal 40 may be assigned to keys on a general keyboard. The closing key is used to declare the close of the registration of a commodity transaction by an operator. The commodity transaction refers to an act of carrying out a trade of commodities with one purchaser.

The display 409 is a display device for displaying a commodity name, a price, total amount and change amount. The display 409 includes a display for store clerk who operates the POS terminal 40 and a display for purchaser.

Further, a touch panel formed in combination with the input device and the display device may be applied instead of the keyboard 408 and the display 409.

The receipt printer 410 prints receipt data indicating details of one commodity transaction on a predetermined receipt paper. The printed receipt paper is cut off by a cutter to issue as a purchase details receipt and handed over to the purchaser.

The scanner 411 optically reads a code symbol such as a barcode, a two-dimensional data code and the like. A code symbol obtained by converting a unique commodity code of each commodity to a barcode is attached to each commodity. The scanner 411 is used to read the code symbol attached to the commodity purchased by the purchaser. Further, the barcode is printed on the tax exemption sheet S, and the scanner 411 is also used to read the barcode thereon.

The card reader (second card reader) 412 reads data recorded on a card medium. In a case in which the card medium is a magnetic card, the card reader 412 is a magnetic card reader. In a case in which the card medium is an IC card, the card reader 412 is an IC card reader. The IC card reader may be a contact type reader or a non-contact type reader. The card reader 412 is used to read data recorded in a credit card or a point card used by the purchaser. The card reader 412 is also used to read data recorded in the tax exemption card C. Thus, if the tax exemption card C is the magnetic card, the card reader 412 is the magnetic card reader. If the tax exemption card C is the IC card, the card reader 412 is the IC card reader.

The drawer 413, used to receive cash and the like therein, carries out an opening operation in response to an opening signal from the CPU 401. With opening the drawer 413, it is carried out to deliver cash such as a deposited money or change between the store clerk and the purchaser. Further, the POS terminal 40 may be connected with an automatic change dispensing machine instead of the drawer 413. In this case, the automatic change dispensing machine dispenses cash as change on the basis of dispensing data from the CPU 401.

The touch panel 414 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 401. A well-known device can be used as the touch sensor.

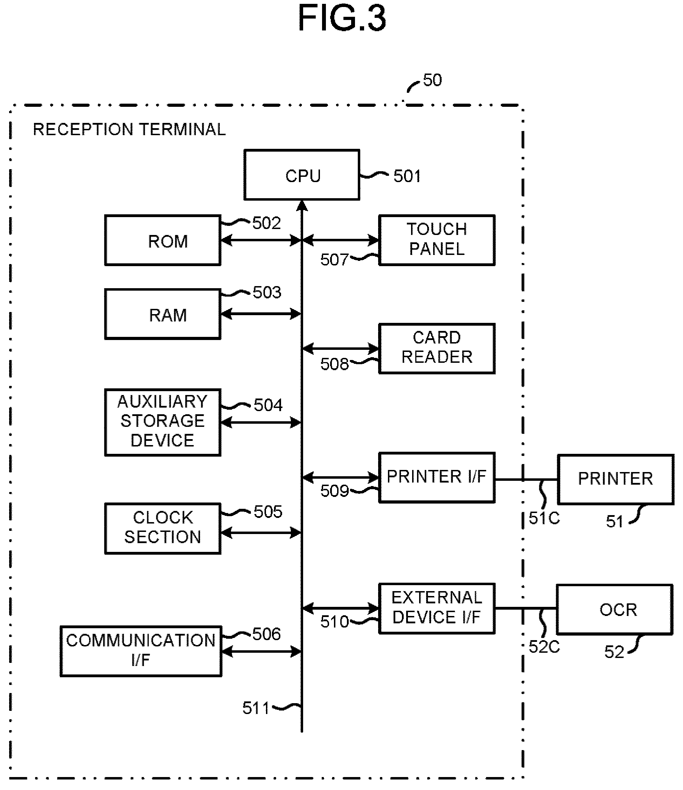

Fig. 3 is a block diagram illustrating the circuit configuration of main sections of the reception terminal 50. The reception terminal 50 is provided with a CPU 501, a ROM 502, a RAM 503, an auxiliary storage device 504, a clock section 505, a communication interface 506, a touch panel 507, a card reader 508, a printer interface 509 and an external device interface 510. In the reception terminal 50, the CPU 501 is connected with the ROM 502, the RAM 503, the auxiliary storage device 504, the clock section 505, the communication interface 506, the touch panel 507, the card reader 508, the printer interface 509 and the external device interface 510 directly through a system transmission path 515 such as an address bus line, a data bus line, a control signal line and the like or indirectly through an input/output circuit.

The CPU 501, the ROM 502, the RAM 503, the auxiliary storage device 504, the clock section 505 and the communication interface 506 of the reception terminal 50 are the same as those of the POS terminal 40.

The touch panel 507 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 501. A well-known device can be used as the touch sensor.

The card reader (first card reader) 508 reads the data recorded on the card medium. In a case in which the card medium is a magnetic card, the card reader 508 is a magnetic card reader. In a case in which the card medium is an IC card, the card reader 508 is an IC card reader. The IC card reader may be a contact type reader or a non-contact type reader. The card reader 508 is used to read the data recorded on the tax exemption card C. Thus, if the tax exemption card C is the magnetic card, the card reader 508 is the magnetic card reader. If the tax exemption card C is the IC card, the card reader 508 is the IC card reader.

The printer interface 509 carries out a data communication with the printer 51 detachably connected therewith via a communication cable 51C according to a preset protocol. The printer 51 is used to print the tax exemption sheet S. A thermal printer or an impact dot printer can be applied as this kind of the printer 51. The reception terminal 50 may be constituted by a well-known POS terminal, and a receipt printer mounted in the POS terminal may be a printer for printing the tax exemption sheet S.

The external device interface 510 carries out a data communication with an OCR (Optical Character Reader) 52 detachably connected therewith via the communication cable 52C according to the preset protocol. The OCR 52 is used to optically read information (category of a passport, name, passport number, nationality, birth date, sex and expiration date of the passport) recorded on, for example, a passport (certificate) for certifying whether or not the purchaser is a nonresident. Certificate is not limited to the passport. For example, in an area like Okinawa Prefecture where a specific tax exemption system is executed, the certificate may be an airline ticket of an air-plane departing from the area.

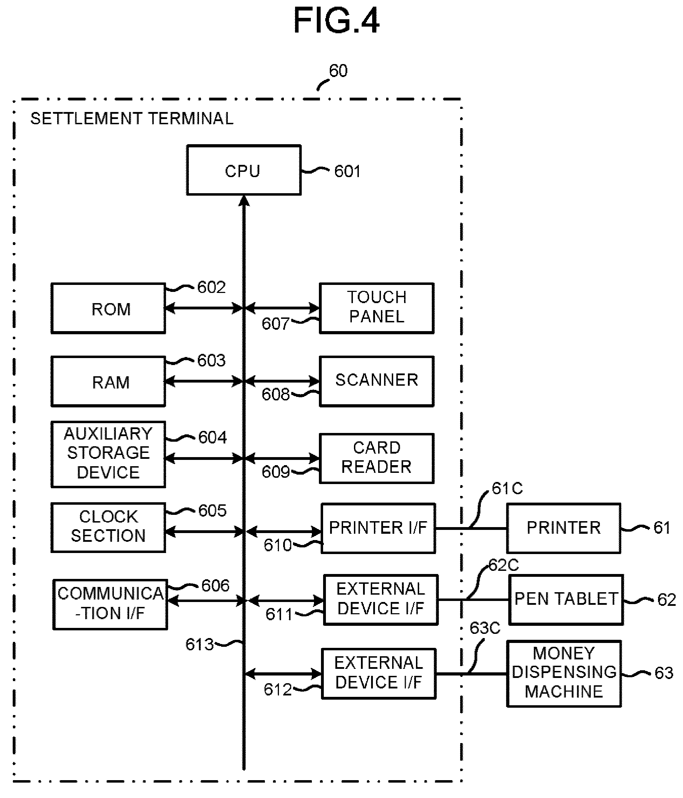

Fig. 4 is a block diagram illustrating the circuit configuration of main sections of the settlement terminal 60. The settlement terminal 60 is provided with a CPU 601, a ROM 602, a RAM 603, an auxiliary storage device 604, a clock section 605, a communication interface 606, a touch panel 607, a scanner 608, a card reader 609, a printer interface 610 and two external device interfaces 611 and 612. In the settlement terminal 60, the CPU 601 is connected with the ROM 602, the RAM 603, the auxiliary storage device 604, the clock section 605, the communication interface 606, the touch panel 607, the scanner 608, the card reader 609, the printer interface 610 and the external device interfaces 611 and 612 directly through a system transmission path 613 such as an address bus line, a data bus line, a control signal line and the like or indirectly through an input/output circuit.

The CPU 601, the ROM 602, the RAM 603, the auxiliary storage device 604, the clock section 605 and the communication interface 606 of the settlement terminal 60 are the same as those of the POS terminal 40 and the reception terminal 50.

The touch panel 607 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 601. A well-known device can be used as the touch sensor.

The scanner 608 optically reads a code symbol such as a barcode, a two-dimensional data code and the like. The scanner 608 is used to read the barcode printed on the tax exemption sheet S.

The card reader (third card reader) 609 reads the data recorded on the card medium. In a case in which the card medium is a magnetic card, the card reader 609 is a magnetic card reader. In a case in which the card medium is an IC card, the card reader 609 is an IC card reader. The IC card reader may be a contact type reader or a non-contact type reader. The card reader 609 is used to read the data recorded on the tax exemption card C. Thus, if the tax exemption card C is the magnetic card, the card reader 609 is the magnetic card reader. If the tax exemption card C is the IC card, the card reader 609 is the IC card reader.

The printer interface 610 carries out a data communication with a printer 61 detachably connected therewith via a communication cable 61C according to a preset protocol. The printer 61 is used to print the document such as the purchase record slip, the consumables warning label and the like. A thermal printer or an impact dot printer can be used as this kind of the printer 61. The settlement terminal 60 may be constituted by a well-known POS terminal, and a receipt printer mounted in the POS terminal may be a printer for printing the foregoing document.

The external device interface 611 carries out a data communication with a pen tablet 62 detachably connected therewith via a communication cable 62C according to a preset protocol. The pen tablet 62 reads a position of an electronic pen on a plate-like tablet main body with a sensor built in the tablet main body, and thus is a detection device for detecting a locus of the electronic pen and electronically acquiring the locus as writing information of a user. A well-known pen tablet such as a liquid crystal pen tablet can be applied as the pen tablet 62. The pen tablet 62 is used to record the electronic signature (electronic sign) of the purchaser in the purchaser written oath (electronic document).

The external device interface 612 carries out a data communication with a money dispensing machine 63 detachably connected therewith via a communication cable 63C according to a preset protocol. The money dispensing machine 63 includes a stocker for storing bills and coins by denominations and a dispensing mechanism for dispensing cash of the amount corresponding to the dispensing data from the stocker to a dispensing port. The money dispensing machine 63 dispenses taxable amount refunded to the purchaser (nonresident) who purchases the tax exemption commodity at a price including tax at the tax-free store 4 in the facility 2 and terminates the tax exemption procedure at the procedure counter 6. The money dispensing machine 63 may be a well-known automatic change dispensing machine linked with the POS terminal. Instead of the money dispensing machine 63, the external device interface 612 may be connected with a drawer storing cash and control the drawer to carry out an opening operation in response to an opening signal from the CPU 601. In this case, by displaying the taxable amount on the touch panel 607, a person in charge of the job at the procedure counter 6 gathers cash equivalent to the taxable amount from the drawer and hands over the cash to the purchaser.

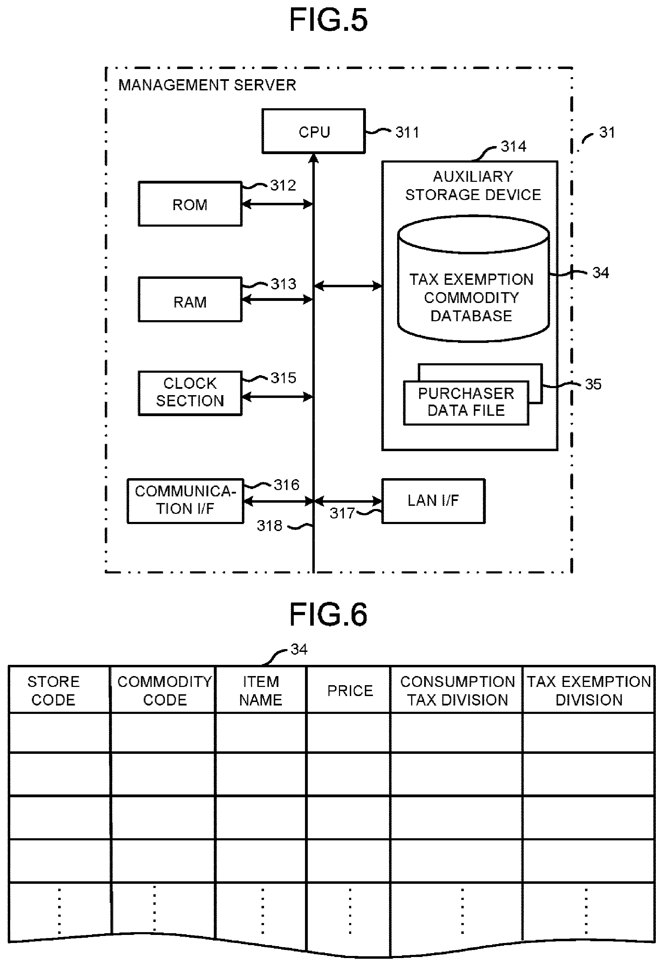

Fig. 5 is a block diagram illustrating the circuit configuration of main sections of the management server 31. The management server 31 is provided with a CPU 311, a ROM 312, a RAM 313, an auxiliary storage device 314, a clock section 315, a communication interface 316 and an LAN interface 317. In the management server 31, the CPU 311 is connected with the ROM 312, the RAM 313, the auxiliary storage device 314, the clock section 315, the communication interface 316 and the LAN interface 317 directly through a system transmission path 318 such as an address bus line, a data bus line, a control signal line and the like or indirectly through an input/output circuit.

The CPU 311, the ROM 312, the RAM 313, the auxiliary storage device 314, the clock section 315 and the communication interface 316 of the management server 31 are the same as those of the POS terminal 40, the reception terminal 50 and the settlement terminal 60.

The LAN interface 317 is connected with an LAN formed in the data center 3. The LAN may be a wired LAN or a wireless LAN.

The management server 31 with such a configuration can store a tax exemption commodity database 34 and a purchaser data file 35 in the auxiliary storage device 314. The tax exemption commodity database 34 stores data relating to a commodity sold to a nonresident at each tax-free store 4 at which the commodity tax is exempted, i.e., a tax-free store.

The tax exemption commodities include the consumables such as foodstuffs, beverages, medicines, cosmetics and the like, and the general goods other than the consumables. At present, in Japan, if sales total amount of one day at the tax-free store 4 in the consumables purchased by the same nonresident in the same facility 2 is in a range from 5,000 yen to 500,000 yen, the consumables are the tax exemption items. In other words, 5,001 yen and 5,000 yen are set as tax exemption points of the consumables. On the other hand, in a case in which the sales total amount calculated in the same way as stated above of the general goods exceeds 10,000 yen, the general goods are the tax exemption items. In other words, 10,001 yen is set as a tax exemption point of the general goods.

Fig. 6 is a schematic view illustrating a part of data stored in the tax exemption commodity database 34. As shown in Fig. 6, in the tax exemption commodity database 34, a data record including items such as a store code, a commodity code, an item name, a price, a consumption tax classification and a tax exemption category is stored. The store code is a unique code set for each tax-free store 4 to individually identify each tax-free store 4. The commodity code is a unique code set for each commodity to individually identify each commodity (containing the tax exemption commodity and the non-tax exemption commodity) sold in a tax-free store 4 identified by a corresponding store code. In the meantime, the commodity codes of the same kind of the commodities may be common in each tax-free store 4 or different in each tax-free store 4. Further, it may be not prevented that the same commodity code is attached to different kinds of the commodities in the different tax-free stores 4.

The item name is a name of the commodity identified by the corresponding commodity code. The price is a unit price (tax-included price or tax-excluded price) of the commodity identified by the corresponding commodity code. In the meantime, the item names or the prices of the same kind of the commodities may be common in each tax-free store 4 or different in each tax-free store 4.

The consumption tax classification is information for classifying whether the commodity identified by the corresponding commodity code is defined with a tax-included or a tax-excluded, and furthermore classifying how much consumption tax rate is applied. In a case in which the consumption tax classification is the tax-included, the price includes tax. Then, a tax-excluded price and the amount of consumption tax can be calculated according to the tax-included price and the consumption tax rate. In a case in which the consumption tax classification is the tax-excluded, the price excludes tax. Then, the tax-included price and the amount of consumption tax can be calculated according to the tax-excluded price and the consumption tax rate. In the meantime, the consumption tax classification for the same kind of the commodities may be common in each tax-free store 4 or different in each tax-free store 4. Further, the consumption tax classification may be different even for each commodity handled in the same tax-free store 4.

The tax exemption category is information for classifying whether the commodity identified by the corresponding commodity code is defined as the consumables or the general goods other than the consumables or a commodity not subject to the tax exemption. For example, in a case in which the category is "1", the CPU 311 of the management server 31 recognizes that the commodity corresponding to the category belongs to the consumables. Similarly, in a case in which the category is "2", the CPU 311 recognizes that the commodity corresponding to the category belongs to the general goods, and in a case in which the category is "3", the CPU 311 recognizes that the commodity corresponding to the category belongs to the commodity not subject to the tax exemption. Furthermore, in a case in which the commodity identified by the corresponding commodity code is a tax-free commodity, no category is set, or a category (number) other than "1", "2" and "3" is set.

The purchaser data file 35 is an area in which various data relating to the nonresident who receives the issue of the tax exemption card C or the tax exemption sheet S at the reception counter 5 of the facility 2, that is, the purchaser who expresses his or her will to purchase the tax exemption commodity at the tax-free store 4 is stored. The management server 31 functions as a storage device.

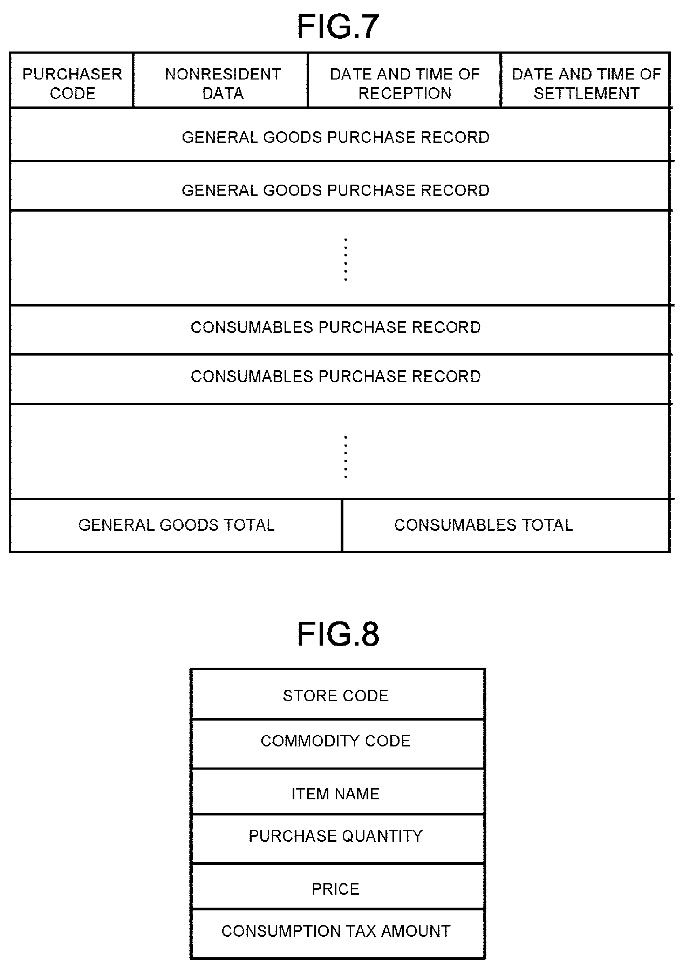

Fig. 7 is a schematic view illustrating main data items stored in the purchaser data file 35. As shown in Fig. 7, in the purchaser data file 35, various data including the purchaser code, nonresident data, date and time of reception, date and time of settlement, a general goods purchase record, a consumables purchase record, general goods total and consumables total is stored.

The purchaser code is a unique code for individually identifying the purchaser who receives the issue of the tax exemption card C or the tax exemption sheet S at the reception counter 5 of the facility 2. The nonresident data is information recorded on the certificate, presented by the purchaser identified by the corresponding purchaser code, which certifies that the purchaser is the nonresident. For example, in a case in which the certificate which certifies that the purchaser is the nonresident is a passport, a category of the passport, name, passport number, nationality, date of birth, sex and expiration date of the passport are contained in the nonresident data. The date and time of reception is date and time on which the purchaser identified by the corresponding purchaser code receives the tax exemption card C or the tax exemption sheet S at the reception counter 5. The date and time of settlement is date and time on which the purchaser identified by the corresponding purchaser code carries out a settlement processing at the procedure counter 6.

The general goods purchase record records data relating to sales of the general goods within the tax exemption commodities purchased by the purchaser identified by the corresponding purchaser code at each tax-free store 4. The consumables purchase record records data relating to sales of the consumables within the tax exemption commodities purchased by the same purchaser at each tax-free store 4. The general goods purchase record and the consumables purchase record have the common data structure and are respectively created for each tax exemption commodity. The general goods total respectively totals a purchase quantity and the tax-excluded price of the general goods within the tax exemption commodities purchased by the purchaser identified by the corresponding purchaser code at each tax-free store 4. The consumables total respectively totals a purchase quantity and the tax-excluded price of the consumables within the tax exemption commodities purchased by the same purchaser at each tax-free store 4.

Fig. 8 is a schematic view illustrating the data structure contained in the general goods purchase record and the consumables purchase record. As shown in Fig. 8, in the general goods purchase record and the consumables purchase record, the store code, the commodity code, the item name, the purchase quantity, a price and consumption tax amount are contained. The store code, the commodity code, the item name and the purchase quantity are as stated above. The price is the tax-excluded price. The consumption tax amount is the amount of the consumption tax levied on the commodity identified by the corresponding commodity code.

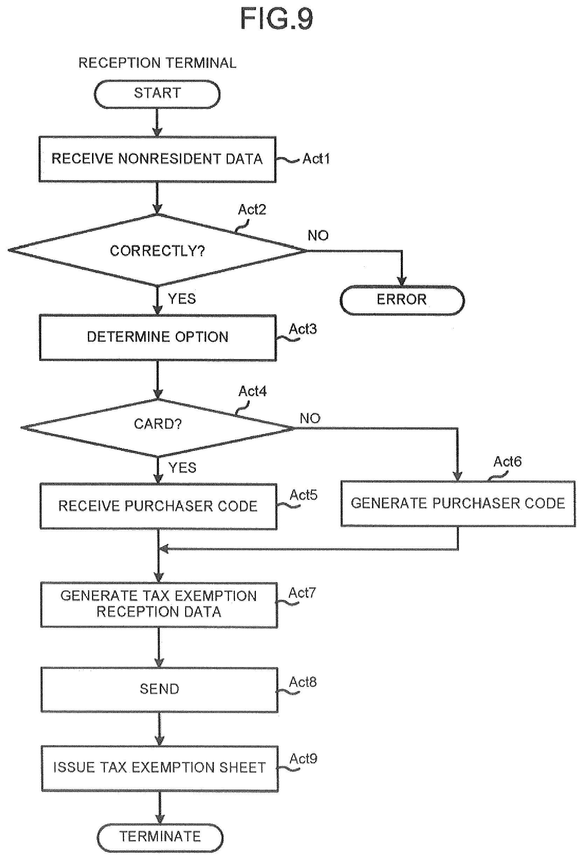

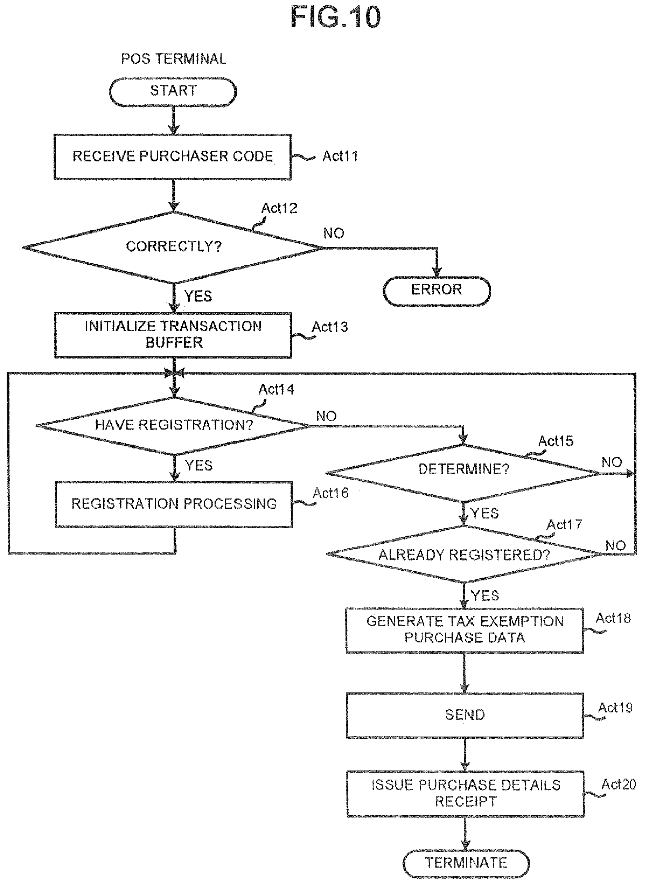

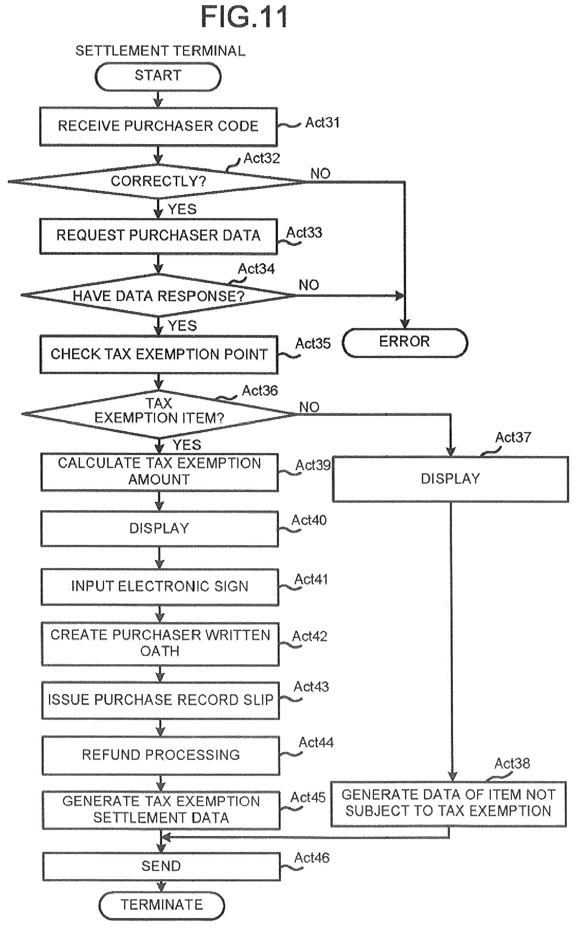

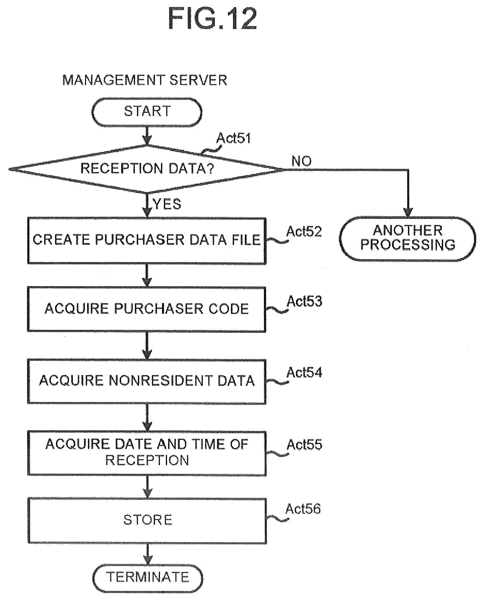

Fig. 9 is a flowchart illustrating main procedures of a control processing carried out by the CPU 501 of the reception terminal 50 according to a control program. Fig. 10 is a flowchart illustrating main procedures of a control processing carried out by the CPU 401 of the POS terminal 40 according to a control program. Fig. 11 is a flowchart illustrating main procedures of a control processing carried out by the CPU 601 of the settlement terminal 60 according to a control program. Fig. 12~Fig. 14 are flowcharts illustrating main procedures of a control processing carried out by the CPU 311 of the management server 31 according to a control program. Hereinafter, operations of the tax exemption processing system 1 are described with reference to Fig. 9 to Fig. 14. The content of the processing described below is an example, and various processing capable of achieving the same result can be properly used.

First, the admitted tax exemption procedure business provider of the facility 2 respectively deploys persons in charge of jobs at the reception counter 5 and at the procedure counter 6. The person in charge may concurrently hold the job of the reception counter 5 and the job of the procedure counter 6.

The nonresident such as a foreign tourist who buys commodities at each tax-free store 4 in the facility 2, using the tax exemption system for the commodity tax, first goes to the reception counter 5. Then, the nonresident presents his or her passport to the person in charge of the job as the certificate for certifying that he/she is a nonresident. The person in charge of the job starts the reception terminal 50. For example, if the touch panel 507 is touched, the reception terminal 50 is started. If the reception terminal 50 is started, the CPU 501 starts the procedures of a processing, i.e., reception processing, shown in the flowchart of Fig. 9.

First, the CPU 501 receives the nonresident data (Act 1). Specifically, the CPU 501 displays a guidance "Please read information of the passport" on the touch panel 507. The person in charge of the job who confirms the guidance reads character information on a page on which the passport number and the like of the passport presented by the nonresident is recorded with the OCR 52. The character information of the passport read by the OCR 52 is supplied to the CPU 501 via the external device interface 510. The CPU 501 analyzes the character information to receive the passport information such as category of the passport, name, passport number, nationality, date of birth, sex and expiration date of the passport as the nonresident data. The CPU 501 functions as a first reception module for receiving the information recorded in the certificate through the processing in Act 1.

Next, the CPU 501 determines whether or not the nonresident data is correctly received (Act 2). For example, if the character information read by the OCR 52 is analyzed but a part or whole of the passport information cannot be received, the CPU 501 determines that the nonresident data cannot be received. In a case in which the nonresident data cannot be received (NO in Act 2), the CPU 501 displays, for example, an error message "Information of the passport cannot be read" on the touch panel 507. Through the above, the reception processing is terminated.

In a case in which the nonresident data can be received (YES in Act 2), the CPU 501 determines an option set in the reception terminal 50 (Act 3). The admitted tax exemption procedure business provider issues the tax exemption card C or the tax exemption sheet S at the reception counter 5 to the nonresident who buys commodities in the facility 2. Issuing which one of the tax exemption card C and the tax exemption sheet S is predetermined by the facility 2. In the facility 2 that issues the tax exemption card C, an option of issuing the tax exemption card is preset in the reception terminal 50. In the facility 2 that issues the tax exemption sheet S, an option of issuing the tax exemption sheet is preset in the reception terminal 50. Further, there is also a case in which an option of non-issue of the tax exemption card C and the tax exemption sheet S is preset in the reception terminal 50. In this case, neither the tax exemption card nor the tax exemption sheet is issued. These setting of the options is carried out, for example, in such a manner that a person in charge of maintenance of the tax exemption processing system 1 operates the touch panel 507 to set or reset an option flag stored in the RAM 503.

The CPU 501 checks a state of the option flag to identify whether the issue of the tax exemption card C is set, the issue of the tax exemption sheet S is set, or the non-issue of the tax exemption card C and the tax exemption sheet S is set (Act 4).

If the issue of the tax exemption card C is set (YES in Act 4), the CPU 501 receives the purchaser code (Act 5). Specifically, the CPU 501 displays a guidance "Please read data of the tax exemption card C" on the touch panel 507. The person in charge of the job who confirms the guidance takes out one tax exemption card C stocked at the reception counter 5 in advance. The unique code is recorded in the tax exemption card C in advance. The person in charge of the job reads the code recorded in the tax exemption card C taken out with the card reader 508. The code (card data) read by the card reader 508 is supplied to the CPU 501. The CPU 501 receives the unique code of each tax exemption card C as the purchaser code. The CPU 501 functions as a fourth reception module for receiving the purchaser code recorded on the card medium (tax exemption card C) through the processing in Act 5.

On the other hand, if the issue of the tax exemption sheet S or the non-issue of the tax exemption card C and the tax exemption sheet S is set (NO in Act 4), the CPU 501 generates the purchaser code (Act 6). Specifically, the CPU 501 generates the purchaser code according to the passport number in the passport information acquired in the processing in Act 1 and the date and time information counted by the clock section 505. For example, the CPU 501 sets the code in which the date and time information is added after the passport number as the purchaser code. Otherwise, the CPU 501 sets the code in which the date and time information is added before the passport number as the purchaser code. The CPU 501 functions as a third generation module for generating the purchaser code according to the information recorded in the certificate through the processing in Act 6.

If the processing in Act 5 or Act 6 is terminated, the CPU 501 generates the tax exemption reception data (Act 7). The tax exemption reception data contains the purchaser code, the nonresident data and the date and time of reception. In other words, the CPU 501 generates the tax exemption reception data by associating the nonresident data received in the processing in Act 1 and the date and time information (date and time of reception) counted by the clock section 505 with the purchaser code received in the processing in Act 5 or the purchaser code generated in the processing in Act 6. The CPU 501 functions as a first generation module for generating the tax exemption reception data in which the information recorded in the certificate is associated with the purchaser code through the processing in Act 7.

The CPU 501 sends the tax exemption reception data to the management server 31 (Act 8). Specifically, the CPU 501 notifies the communication interface 506 to send the tax exemption reception data to the management server 31. After receiving the notification, the communication interface 506 sends the tax exemption reception data to the management server 31 via the network 7. The CPU 501 functions as a first sending module for sending the tax exemption reception data to the management server 31 (storage device) through cooperating with the communication interface 506.

The CPU 501 issues the tax exemption sheet S (Act 9). The contents of the issued tax exemption sheet S are different from each other according to the state of the option flag determined in Act 3. Specifically, in a case in which the option of the issue of the tax exemption sheet S is set, the CPU 501 generates a print data of the tax exemption sheet S containing the barcode representing the purchaser code generated in Act 6. In the print data, in addition to the foregoing barcode, the date and time information counted by the clock section 505, logo information of the facility 2 and text data illustrating a use method of the tax exemption sheet S are contained. Furthermore, if the option of the issue of the tax exemption card C is set, the CPU 501 generates a print data other than the foregoing barcode. The CPU 501 notifies the printer interface 509 to output the print data of the tax exemption sheet S to the printer 51. After receiving the notification, the printer interface 509 outputs the print data of the tax exemption sheet S to the printer 51. Through the foregoing processing, the printer 51 is driven to issue the tax exemption sheet S. The CPU 501 functions as a first issuing module for issuing the sheet on which the purchaser code is printed through the cooperation with the printer 51. Furthermore, if the option of the non-issue of the tax exemption card C and the tax exemption sheet S is set in the reception terminal 50, the foregoing tax exemption sheet S is not issued.

The CPU 311 of the management server 31 that receives the tax exemption reception data starts an information processing including procedures shown in the flowchart in Fig. 12.

First, the CPU 311 confirms whether or not the reception data is the tax exemption reception data (Act 51). If the reception data is the tax exemption reception data (YES in Act 51), the CPU 311 creates a new purchaser data file 35 on the auxiliary storage device 314 (Act 52).

Next, the CPU 311 acquires the purchaser code from the tax exemption reception data (Act 53). The CPU 311 acquires the nonresident data from the tax exemption reception data (Act 54). Furthermore, the CPU 311 acquires the date and time of reception from the tax exemption reception data (Act 55). The order of the procedures of Acts 53, 54 and 55 may not be limited to this order. The order of the procedures may be in any order as long as the purchaser code, the nonresident data and the date and time of reception can be acquired from the tax exemption reception data.

If the processing in Acts 53, 54 and 55 is terminated, the CPU 311 stores the purchaser code, the nonresident data and the date and time of reception acquired from the tax exemption reception data in the purchaser data file 35 created through the processing in Act 52 (Act 56). Through the above, the CPU 311 terminates the reception processing of the tax exemption reception data. The CPU 311 functions as a first storage module for creating the purchaser data file 35 in which the purchaser code contained in the tax exemption reception data is set in response to the reception of the tax exemption reception data and storing the information recorded in the certificate contained in the tax exemption reception data in the purchaser data file 35 through cooperation with the auxiliary storage device 314.

If terminating the sending of the tax exemption reception data, the CPU 501 of the reception terminal 50 displays, for example, a message indicating the completion of the sending on the touch panel 507. Through the above, the CPU 501 terminates the reception processing of the tax exemption reception data for the nonresident.

The person in charge of the job of the reception counter 5 who confirms the message indicating the completion of the sending of the tax exemption reception data hands over the tax exemption card C or the tax exemption sheet S to the nonresident. Which one of the tax exemption card C and the tax exemption sheet S is handed over is determined by each facility 2 as stated above. The nonresident can present the tax exemption card C or the tax exemption sheet S to utilize the tax exemption system to purchase a commodity at each tax-free store 4 in the facility 2.

In a case of receiving the presentation of the tax exemption card C or the tax exemption sheet S from the purchaser of the commodity, the store clerk of the tax-free store 4 operates the POS terminal 40 to declare sales registration of the commodity purchased by the nonresident. For example, a declaration key for declaring the sales registration of the commodity purchased by the nonresident is arranged on the keyboard 408 of the POS terminal 40, and the store clerk operates the declaration key. After operating the declaration key, the store clerk reads the data recorded on the tax exemption card C, using the card reader 412. Otherwise, the store clerk reads the barcode printed on the tax exemption sheet S, using the scanner 411.

If the foregoing declaration key is input, the CPU 401 of the POS terminal 40 starts an information processing including procedures shown in the flowchart in Fig. 10.

First, the CPU 401 receives the purchaser code (Act 11). Specifically, if the data recorded on the tax exemption card C is read by the card reader 412, the CPU 401 receives the data as the purchaser code. Otherwise, if the barcode printed on the tax exemption sheet S is read by the scanner 411, the CPU 401 receives a code obtained by analyzing the barcode as the purchaser code. The CPU 401 functions as a second reception module for receiving the purchaser code of the purchaser through the processing in Act 11.

Next, the CPU 401 determines whether or not the purchaser code can be correctly received (Act 12). For example, in a case in which the card data read by the card reader 412 is analyzed but the code recorded in the tax exemption card C is not coincident with the code system, the CPU 401 determines that the purchaser code cannot be received. Similarly, in a case in which the system of the code obtained from the barcode read by the scanner 411 is different from the purchaser code generated according to the passport number and the date and time information, the CPU 401 determines that the purchaser code cannot be received. If the purchaser code cannot be received (NO in Act 12), the CPU 401 displays, for example, an error message "Purchaser code cannot be read". Through the above, the information processing in Fig. 10 is terminated.

If the purchaser code can be received (YES in Act 12), the CPU 401 initializes a transaction buffer (Act 13). The transaction buffer is an area for storing the data of the commodity traded as one commodity transaction, and is formed on, for example, the RAM 403.

After initializing the transaction buffer, the CPU 401 confirms presence or absence of commodity registration (Act 14). Specifically, the CPU 401 confirms whether or not the barcode attached to the commodity is read through the scanner 411, whether or not the commodity code is input through the key input of the keyboard 408, or whether or not a commodity key is touched through the touch panel 414. If the barcode is read, the commodity code is input or the commodity key is touched, the CPU 401 recognizes the presence of the commodity registration.

If the presence of the commodity registration cannot be recognized (NO in Act 14), the CPU 401 confirms presence or absence of a registration determination operation (Act 15). Specifically, the CPU 401 confirms whether or not a determination key on the touch panel 414 is touched. If it is determined that the determination key is touched, the CPU 401 recognizes the presence of the registration determination operation.

If the presence of the registration determination operation cannot be recognized (NO in Act 15), the CPU 401 proceeds to the processing in Act 14 again to confirm the presence or absence of the commodity registration. Thus, the CPU 401 waits for the execution of the commodity registration or the execution of the registration determination operation through the processing in Act 14 and Act 15. Further, in the standby state, in a case in which the input of another key (the numeric keys, the multiplication key and the subtotal key) is detected, the CPU 401 returns to the standby states in Act 14 and Act 15 again after the processing corresponding to the input key is executed.

The store clerk registers the data of the commodity purchased by the purchaser in the POS terminal 40. For example, in a case in which the barcode is attached to the commodity, the store clerk reads the barcode with the scanner 411. In a case in which the barcode is not attached to the commodity, the store clerk inputs the commodity code from the keyboard 408 or touches the commodity key displayed on the screen of the touch panel 414. In this way, if the registration of the data of all the commodities purchased by the purchaser is completed, the store clerk touches the determination key.

In the standby states in Act 14 and Act 15, if the presence of the commodity registration is recognized (YES in Act 14), the CPU 401 carries out the registration processing of the commodity data (Act 16). The registration processing is carried out by the existing POS terminal, and thus the detailed description thereof is omitted. In the POS terminal 40, through the registration processing, purchased commodity data containing the commodity code, the commodity name, the price, the consumption tax amount, a sales quantity and the sales amount is stored in the transaction buffer as information relating to the sales of the commodity purchased by the purchaser.

If the registration processing is terminated, the CPU 401 proceeds to the processing in Act 14 again to confirm the presence or absence of the commodity registration. Thus, each time the presence of the commodity registration is recognized, the CPU 401 repeatedly carries out the registration processing in Act 16. In this way, the information relating to the sales of the commodity purchased by the purchaser is collectively stored in the transaction buffer.

In the standby states in Act 14 and Act 15, if the presence of the registration determination operation is recognized (YES in Act 15), the CPU 401 determines whether or not the commodity or commodity data is already registered (Act 17). If the purchased commodity data is not stored in the transaction buffer, the commodity is not yet registered. In this case (NO in Act 17), the CPU 401 proceeds to the processing in Act 14 again to recognize the presence or absence of the commodity registration.

In a case in which the purchased commodity data is stored in the transaction buffer and thus the registration of the commodity is recognized (YES in Act 17), the CPU 401 generates the tax exemption commodity purchase data (Act 18). Specifically, the CPU 401 generates the tax exemption commodity purchase data by associating the purchaser code received in the processing in Act 11 and the store code set in the auxiliary storage device 404 in advance with the purchased commodity data stored in the transaction buffer. The CPU 401 functions as a second generation module for generating the tax exemption commodity purchase data in which the information relating to the sales of the commodity purchased by the purchaser is associated with the purchaser code through the processing in Act 18.

The CPU 401 sends the tax exemption commodity purchase data to the management server 31 (Act 19). Specifically, the CPU 401 notifies or instructs the communication interface 406 to send the tax exemption commodity purchase data to the management server 31. After receiving the notification, the communication interface 406 sends the tax exemption commodity purchase data to the management server 31 via the network 7. The CPU 401 functions as a second sending module for sending the tax exemption commodity purchase data to the management server 31 through the cooperation with the communication interface 406.

If the sending processing is terminated, the CPU 401 controls the issue of the purchase details receipt (Act 20). Specifically, the CPU 401 generates a print data of the purchase details receipt on the basis of the purchased commodity data stored in the transaction buffer. Then, the CPU 401 outputs the print data to the receipt printer 410 to print the purchase details receipt. The printed purchase details receipt is issued from an issuing port, and thus the store clerk hands over the purchase details receipt to the purchaser.

Through the above, the CPU 401 terminates the registration processing of the commodity purchased by the nonresident.

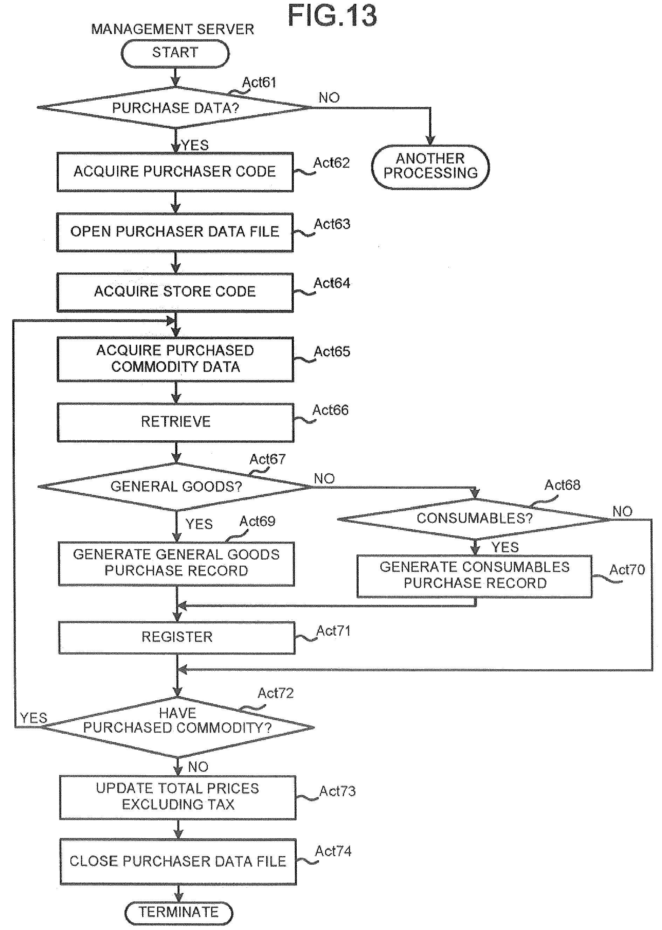

The CPU 311 of the management server 31 receiving the tax exemption commodity purchase data starts an information processing including procedures shown in the flowchart in Fig. 13.

First, the CPU 311 confirms whether or not the reception data is the tax exemption commodity purchase data (Act 61). If the reception data is the tax exemption commodity purchase data (YES in Act 61), the CPU 311 acquires the purchaser code from the tax exemption commodity purchase data (Act 62). Then, the CPU 311 reads out the purchaser data file 35 containing the acquired purchaser code from the auxiliary storage device 314 and copies the purchaser data file 35 on the RAM 313 to open the purchaser data file 35 (Act 63).

Next, the CPU 311 acquires the store code from the tax exemption commodity purchase data (Act 64). The CPU 311 also acquires the purchased commodity data from the tax exemption commodity purchase data (Act 65). In a case in which a plurality of the purchased commodity data is contained in the tax exemption commodity purchase data, the CPU 311 selectively acquires one of the purchased commodity data.

The CPU 311 retrieves the tax exemption commodity database 34 by taking the store code acquired in the processing in Act 64 and the commodity code contained in the purchased commodity data acquired in the processing in Act 65 as keys for retrieval (Act 66). Then, the CPU 311 determines the tax exemption classification of a record in which the store code and the commodity code are coincident with the keys for retrieval. In other words, the CPU 311 confirms whether or not the tax exemption classification indicates the general goods (Act 67). If the tax exemption classification does not indicate the general goods (NO in Act 67), the CPU 311 confirms whether or not the tax exemption classification indicates the consumables (Act 68). If the tax exemption classification does not indicate the consumables (NO in Act 68), the CPU 311 proceeds to the processing in Act 72. Such a procedure is carried out in a case in which the commodity identified by the corresponding commodity code is a commodity not subject to the tax exemption or a tax-free commodity.

On the other hand, if the tax exemption classification indicates the general goods (YES in Act 67), the CPU 311 generates the general goods purchase record (Act 69). In other words, the CPU 311 generates the general goods purchase record according to the store code acquired in the processing in Act 64 and the commodity code, the item name, the purchase quantity, the price and the consumption tax amount in the purchased commodity data acquired in the processing in Act 65. Further, if the tax exemption classification indicates the consumables (YES in Act 68), the CPU 311 generates the consumables purchase record (Act 70). In other words, the CPU 311 generates the consumables purchase record according to the store code acquired in the processing in Act 64 and the commodity code, the item name, the purchase quantity, the price and the consumption tax amount in the purchased commodity data acquired in the processing in Act 65. In this way, if the general goods purchase record or the consumables purchase record is generated, the CPU 311 registers the generated record in the purchaser data file 35 on the RAM 43 (Act 71). Then, the CPU 311 proceeds to the processing in Act 72. The CPU 311 functions as a second storage module for storing the information relating to the sales of the commodity contained in the tax exemption commodity purchase data in the purchaser data file 35 in which the purchaser code contained in the tax exemption commodity purchase data is set in response to the reception of the tax exemption commodity purchase data through the processing in Act 67~Act 71.

In Act 72, the CPU 311 determines whether or not the purchased commodity data which is not acquired yet in the processing in Act 65 exists in the tax exemption commodity purchase data. If such purchased commodity data exists (YES in Act 72), the CPU 311 returns to the processing in Act 65. Then, the CPU 311 repeats the processing subsequent to Act 65 in the same way as stated above.

In this way, as to all the purchased commodity data contained in the tax exemption purchase data, after the processing subsequent to Act 65 is executed (NO in Act 72), the CPU 311 updates each data of the total of the general goods and the total of the consumables in the purchaser data file 35 (Act 73). Specifically, the CPU 311 respectively totals the purchase quantity, the price, the consumption tax amount of each general goods purchase record registered in the purchaser data file 35 and overwrites the general goods total data in the purchaser data file 35 with them. Similarly, the CPU 311 respectively totals the purchase quantity, the price, the consumption tax amount of each consumables purchase record registered in the purchaser data file 35 and overwrites the consumables total data in the purchaser data file 35 with them.

Afterwards, the CPU 311 stores the purchaser data file 35 on the RAM 43 in the auxiliary storage device 314 in an overwritten manner to close the purchaser data file 35 (Act 74). Through the above, the CPU 311 terminates the reception processing of the tax exemption commodity purchase data.

The nonresident who finishes the shopping in each tax-free store 4 goes to the procedure counter 6. Then, the nonresident presents the tax exemption card C or the tax exemption sheet S to the person in charge of the job.

In a case of receiving the presentation of the tax exemption card C or the tax exemption sheet S from the nonresident, the person in charge of the job starts the settlement terminal 60. For example, if the touch panel 507 is touched, the settlement terminal 60 is started. If the settlement terminal 60 is started, the CPU 601 starts a processing of procedures, i.e., settlement processing, shown in the flowchart in Fig. 11.

First, the CPU 601 receives the purchaser data (Act 31). Specifically, the CPU 601 displays a guidance such as "Please read the data of the tax exemption card" or "Please scan the barcode of the tax exemption sheet" on the touch panel 607. The person in charge of the job who confirms the guidance reads the data recorded on the tax exemption card C presented by the nonresident with the card reader 609. Otherwise, the person in charge of the job reads the barcode printed on the tax exemption sheet S presented by the nonresident with the scanner 608. If the data recorded on the tax exemption card C is read by the card reader 609, the CPU 601 receives the data as the purchaser code. If the barcode printed on the tax exemption sheet S is read by the scanner 608, the CPU 601 receives a code obtained by analyzing the barcode as the purchaser code. The computer containing the CPU 601 as the main part thereof functions as a third reception module for receiving the purchaser code of the purchaser who is going to receive the refund to the purchased commodity through the processing in Act 31.

Next, the CPU 601 determines whether or not the purchaser code can be correctly received (Act 32). For example, in a case in which the card data read by the card reader 609 is analyzed but the code recorded on the tax exemption card C is not coincident with the code system, the CPU 601 determines that the purchaser code cannot be received. Similarly, in a case in which the system of the code obtained from the barcode read by the scanner 608 is different from the system of the purchaser code generated according to the passport number and the date and time information, the CPU 601 determines that the purchaser code cannot be received. If the purchaser code cannot be received (NO in Act 32), the CPU 601 displays an error message, for example, "Purchaser code cannot be read" on the touch panel 607. Through the above, the CPU 601 terminates the settlement processing.

If the purchaser code can be received (YES in Act 32), the CPU 601 requests the purchaser data file 35 to the management server 31 (Act 33). Specifically, the CPU 601 generates an inquiry command of the purchaser data file 35 containing the purchaser code received in the processing in Act 31 and notifies the communication interface 606 to send the inquiry command to the management server 31. After receiving the notification, the communication interface 606 sends the inquiry command to the management server 31 via the network 7.

The CPU 311 of the management server 31 that receives the inquiry command retrieves the purchaser data file 35 in which the purchaser code in the command is set. If the purchaser data file 35 is detected, the CPU 311 sends the purchaser data file 35 to the settlement terminal 60 serving as a sending source of the inquiry command via the network 7.

The CPU 601 that sends the inquiry command confirms presence or absence of a response of the purchaser data file 35 (Act 34). If there is no response of the purchaser data file 35 (NO in Act 34), the CPU 601 displays an error message, for example, "Purchaser data file cannot be acquired" on the touch panel 607. Through the above, the CPU 601 terminates the settlement processing.

If there is a response of the purchaser data file 35 (YES in Act 34), the CPU 601 stores the purchaser data file in the working area of the RAM 313. Then, the CPU 601 executes the following processing on the purchaser data file. In other words, the CPU 601 checks the tax exemption point (Act 35). Specifically, the CPU 601 confirms whether or not the amount (a total of the tax-excluded prices) of the general goods total data stored in the purchaser data file 35 is equal to or greater than the lower limit amount "10,001" authorized as the tax exemption point. Further, the CPU 601 confirms whether or not the amount (a total of the tax-excluded prices) of the consumables total data stored in the purchaser data file 35 is in a range of the amount from the lower limit amount "5,001" to the upper limit amount "500,000" authorized as the tax exemption points.

In this way, the tax exemption point is checked, and then the CPU 601 determines whether or not it is the tax exemption item (Act 36). Specifically, if the amount of the general goods total data is equal to or greater than the lower limit amount authorized as the tax exemption point of the general goods or if the amount of the consumables total data is in the range of the amount from the lower limit amount to the upper limit amount authorized as the tax exemption points of the consumables in the processing in Act 35, the CPU 601 authorizes it as the tax exemption item. If the amount of the general goods total data is smaller than the lower limit amount authorized as the tax exemption point of the general goods or if the amount of the consumables total data is less than the lower limit amount or greater than the upper limit amount authorized as the tax exemption points of the consumables, the CPU 601 does not authorize it as the tax exemption item. The computer including the CPU 601 as the main part thereof functions as a determination module for determining whether or not the purchase total amount of the taxable commodity purchased by the purchaser identified by the purchaser code is the tax exemption item through the processing in Act 35 and Act 36.

If it is authorized that it is not the tax exemption item (NO in Act 36), the CPU 601 displays a message, for example, "It is not a tax exemption item" (Act 37) on the touch panel 607. The CPU 601 generates a data of the outside of tax exemption (Act 38). The purchaser code received in the processing in Act 31 is contained in the data of the outside of tax exemption. Afterwards, the CPU 601 proceeds to the processing in Act 46.

On the other hand, if it is determined that it is the tax exemption item (YES in Act 36), the CPU 601 calculates tax exemption amount (Act 39). Specifically, the CPU 601 calculates the sum of the consumption tax amount of the general goods total data and the consumption tax amount of the consumables total data stored in the purchaser data file 35. In this way, the tax exemption amount is calculated, and then the CPU 601 displays the tax exemption amount on the touch panel 607 as the amount of refund (Act 40). For example, the CPU 601 displays a message "Tax exemption amount XXX yen is refunded" on the touch panel 607. The computer including the CPU 601 as the main part thereof functions as a display module for displaying the amount of tax levied on the taxable commodity on the display device as the amount of refund through the cooperation with the touch panel 607. The display device for displaying the amount of tax levied on the taxable commodity as the amount of refund may not be limited to the touch panel 607 and may be the pen tablet 62.

The person in charge of the job can recognize whether or not the nonresident is subject to tax exemption according to the display content of the touch panel 607. Then, if the nonresident is subject to tax exemption, the person in charge of the job requests the signature (electronic sign) on the pen tablet 62 with the nonresident.

After the tax exemption amount (amount of refund) is displayed, the CPU 601 receives the input of the electronic sign (electronic signature) (Act 41). Specifically, the CPU 601 acquires handwriting data from the pen tablet 62 via the external device interface 611. Then, the CPU 601 stores the handwriting data in the working area as an electronic signature data of the purchaser, i.e., nonresident.

Next, the CPU 601 creates the purchaser written oath on the basis of the data in the purchaser data file 35 (Act 42). The purchaser written oath is created for each tax-free store 4.

In the purchaser written oath, as common items, the name, the nationality, the date of birth, the passport number and the like of the purchaser (nonresident) are necessary. The CPU 601 acquires this information from the nonresident data in the purchaser data file 35. Further, in the written oath, as a common item, the date of purchase is necessary. The CPU 601 acquires the date of the purchase from the data of the date and time of reception in the purchaser data file 35. Otherwise, the CPU 601 may acquire the date of purchase from the data of the date and time counted by the clock section 605. Further, in the written oath, as a common item, the full name or store name of the business person who runs the tax-free store 4 is necessary. A data table for setting the full name or store name of the business person of each tax-free store 4 in association with the store code of the tax-free store 4 is stored in the auxiliary storage device 604 of the settlement terminal 60. The CPU 601 acquires the full name or store name of the business person from the data table with each store code contained in the general goods purchase record and the consumables purchase record as a key.

On the other hand, in the purchaser written oath, the item names, the quantities, the tax- excluded prices and the total of the tax-excluded prices of all the purchased commodities classified as a general goods are necessary. The CPU 601 acquires this information from the general goods total data and the general goods purchase record in the purchaser data file 35. Similarly, in the purchaser written oath, the item names, the quantities, the tax-excluded prices and the total of the tax-excluded prices of all the purchased commodities classified as a consumables are necessary. The CPU 601 acquires this information from the consumables total data and the consumables purchase record in the purchaser data file 35.

Further, in the purchaser written oath, as a common item, the signature of purchaser is necessary. The CPU 601 acquires the data of the electronic signature stored in the RAM 603 as the signature of the purchaser.

In the auxiliary storage device 604 of the settlement terminal 60, a layout data of the purchaser written oath in which the content of the oath for the tax-free store is recorded in mother tongue is stored. The CPU 601 acquires the layout data of the purchaser written oath the number of which is equal to that of the store codes contained in the general goods purchase record and the consumables purchase record in the purchaser data file 35. Then, the CPU 601 respectively arranges the data of the record items acquired from the purchaser data file 35 in the layout data to complete the electronic data of the purchaser written oath for each tax-free store 4.

Next, the CPU 601 issues the purchase record slip on the basis of the data in the purchaser data file 35 (Act 43). The purchase record slip records information of a seller (full name or store name), information of the purchaser (full name, date of birth, passport number and the like), the date of purchase, information (item name, tax-excluded selling prices, sales quantity, total amount of tax-excluded prices and the like) relating to purchased commodities and important points (matters that demand special attention). Thus, in the auxiliary storage device 604 of the settlement terminal 60, a layout data of the purchase record slip in which the important points are recorded in mother tongue is stored. The CPU 601 arranges the data of the record items acquired from the purchaser data file 35 in the layout data to complete print data of the purchase record slip. Then, the CPU 601 notifies the printer interface 610 to output the print data of the purchase record slip to the printer 61. After receiving the notification, the printer interface 610 outputs the print data of the purchase record slip to the printer 61. Through the processing described above, the printer 61 is driven to print the purchase record slip, and the purchase record slip is issued.

The CPU 601 functions as a creation module for creating documents necessary for the tax exemption measure through the processing in Act 42 and Act 43. In the foregoing description, the purchaser written oath and the purchase record slip are exemplified as the documents necessary for the tax exemption measure; however, other documents such as the consumables warning label can also be created in the manner similar to the above.

Next, the CPU 601 carries out a refund processing (Act 44). Specifically, the CPU 601 notifies the external device interface 612 to output the dispensing data of the tax exemption amount (amount of refund) calculated in the processing in Act 39 to the money dispensing machine 63. After receiving the notification, the external device interface 612 outputs the dispensing data to the money dispensing machine 63. Through the foregoing processing, the money dispensing machine 63 is driven, and cash equivalent to the tax exemption amount is dispensed. The computer including the CPU 601 as the main part thereof functions as an instruction module for instructing the money dispensing machine 63 to dispense the cash equivalent to the amount of refund through the cooperation with the external device interface 612.

Next, the CPU 601 generates the tax exemption settlement data (Act 45). Specifically, the CPU 601 generates the tax exemption settlement data by associating the date and time data (date and time of settlement) counted by the clock section 605 and the electronic data of the purchaser written oath created in the processing in Act 42 with the purchaser code acquired in the processing in Act 31. In this way, the CPU 601 generates the tax exemption settlement data, and then proceeds to the processing in Act 46.

In Act 46, the CPU 601 sends the tax exemption settlement data generated in the processing in Act 45 or the data of the outside of tax exemption generated in the processing in Act 38 to the management server 31. Specifically, the CPU 601 notifies the communication interface 606 to send the tax exemption settlement data or the data of the outside of tax exemption to the management server 31. After receiving the notification, the communication interface 606 sends the tax exemption settlement data or the data of the outside of tax exemption to the management server 31 via the network 7.

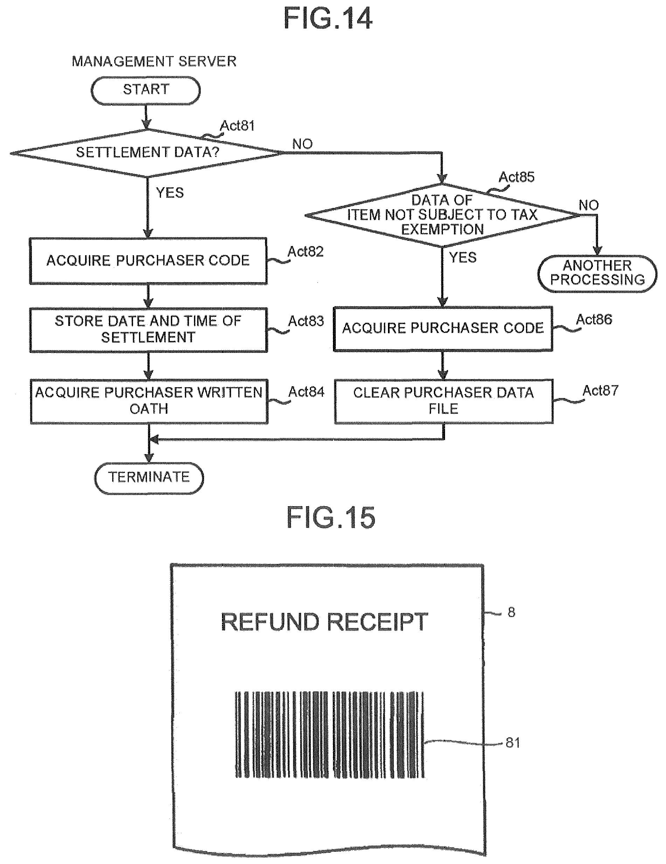

The CPU 311 of the management server 31 that receives the tax exemption settlement data or the data of the outside of tax exemption starts an information processing including procedures shown in the flowchart in Fig. 14.

First, the CPU 311 confirms whether or not the reception data is the tax exemption settlement data (Act 81). If the reception data is the tax exemption settlement data (YES in Act 81), the CPU 311 acquires the purchaser code from the tax exemption settlement data (Act 82). Then, the CPU 311 stores the data of the date and time of settlement contained in the tax exemption settlement data in the purchaser data file 35 containing the acquired purchaser code (Act 83).

Next, the CPU 311 acquires the electronic data of the purchaser written oath from the tax exemption settlement data and stores the electronic data in the auxiliary storage device 314 (Act 84). Through the above, the CPU 311 terminates the reception processing of the tax exemption settlement data.

On the other hand, if the reception data is not the tax exemption settlement data (NO in Act 81), the CPU 311 confirms whether or not the reception data is the data of the outside of tax exemption (Act 85). If the reception data is the data of the outside of tax exemption (YES in Act 85), the CPU 311 acquires the purchaser code from the data of the outside of tax exemption (Act 86). Then, the CPU 311 clears the purchaser data file 35 containing the acquired purchaser code from the auxiliary storage device 314 (Act 87). Through the above, the CPU 311 terminates the reception processing of the data of the outside of tax exemption.

In this way, in the facility 2 where the tax exemption processing system 1 of the present embodiment is constructed, the nonresident such as a foreign tourist who presents the certificate such as a passport for certifying that he/she is subject to tax exemption at the reception counter 5 receives the issue of the tax exemption card C or the tax exemption sheet S from the person in charge of the job at the reception counter 5. Afterwards, the nonresident presents the tax exemption card C or the tax exemption sheet S to the store clerk to do the shopping at the tax-free store 4. Then, if the shopping in the facility 2 is ended, the nonresident goes to the procedure counter 6 to present the tax exemption card C or the tax exemption sheet S to the person in charge of the job. The person in charge of the job at the procedure counter 6 carries out an operation of reading the data of the tax exemption card C or the barcode of the tax exemption sheet S through the settlement terminal 60.

Thus, in the settlement terminal 60, the information relating to the sales of the commodity purchased by the nonresident at each tax-free store 4 in the facility 2 is collected from the management server 31. Then, it is automatically checked on the basis of the information whether or not the purchased commodity is subject to tax exemption. If the commodity is subject to tax exemption, the total of the amount of tax levied on the commodity serving as a taxable object, i.e., the tax exemption amount, is displayed on the touch panel 607 as the amount of refund. Then, at the procedure counter 6, the cash equivalent to the amount of refund is dispensed from the money dispensing machine 63.

Thus, conventionally, the person in charge of the job at the procedure counter 6 divides the commodities subject to the tax exemption purchased by the purchaser into the consumables and the general goods other than the consumables on the basis of the information of the receipt received by the purchaser (nonresident) from each tax-free store 4 and respectively totals the tax-excluded prices for the consumables and the general goods to determine whether or not the commodities are subject to the tax exemption. However, these procedures can be wholly simplified. If the commodities are subject to the tax exemption, the calculation with which the tax exemption amount is derived is also unnecessary. As a result, as the procedures of the tax exemption measure carried out at the procedure counter 6 are simplified, excellent effects such as the reduction to the burden of the person in charge of the job and the time savings on the procedures are achieved.

It is not required for the nonresident to present the passport at each tax-free store 4. Because of this, each tax-free store 4 is not required to prepare the OCR 52 for reading the information of the passport, and the existing POS terminal 40 provided with the scanner 411 and the card reader 412 can be applied as a hardware without performing any modification. Thus, the tax-free store 4 can be easily converted to the procedure consignment type tax-free store without increasing equipment cost.

Furthermore, as described above, the nonresident may not present the passport at each tax-free store 4, and therefore a risk of missing the passport, e.g., thief, lost and the like, can be reduced. In addition, the nonresident may not present the receipt at the procedure counter 6. Thus, the nonresident is also not required to keep the receipts issued at each tax-free store 4 in a wallet and the like without missing the receipts. Therefore, a system with a high efficiency and a good user friendliness for the nonresident is realized.

Further, in the tax exemption processing system 1 of the present embodiment, the documents necessary for the tax exemption measure such as the purchaser written oath and the purchase record slip are automatically generated by the settlement terminal 60 on the basis of the information, recorded in the certificate such as a passport, which is read by the OCR 52 at the reception counter 5. Thus, it is not required for the person in charge of the job at the procedure counter 6 to create these documents by handwriting. From this point, the burden of the person in charge of the job can be reduced and the time savings on the procedures can be achieved.

The purchaser written oath created by the settlement terminal 60 is transferred to the management server 31 to be stored therein as an electronic data. Thus, each tax-free store 4 has an obligation of storing the purchaser written oath for seven years from the day on which two months elapses from the next day of the last day of the taxable period to which the day on which the tax exemption sales is carried out at each tax-free store 4 belongs; however, according to the present embodiment, each tax-free store 4 is not required to individually store the purchaser written oath. In other words, there is an advantage in that the storage job at each tax-free store 4 can also be simplified.

Further, the present invention is not limited to the foregoing embodiment.

For example, in the foregoing embodiment, the selection of issuing either the tax exemption card C or the tax exemption sheet S to the nonresident is set on the reception terminal 50; however, the selection may be omitted. In other words, in the flowchart in Fig. 9, if the result of the determination of the processing in Act 2 is "YES", a control program may be formed to make the flow proceed to the processing in Act 5. Otherwise, if the result of the determination of the processing in Act 2 is "YES", a control program may be formed to make the flow proceed to the processing in Act 6. In the former modification, the operation is limited to the use of the tax exemption card C. Thus, in the POS terminal 40, the reception terminal 50 and the settlement terminal 60, the card readers 412, 508 and 609 may not be required. In the latter modification, the operation is limited to the use of the tax exemption sheet S. Thus, in the POS terminal 40 and the settlement terminal 60, the scanners 411 and 608 may not be required.

Further, in the foregoing embodiment, the reception terminal 50 converts the purchaser code generated according to the passport number and the date and time information to the barcode and prints the barcode representing the purchaser code on the tax exemption sheet S; however, the reception terminal 50 may be equipped with a card reader/writer, instead of the card reader 508, to record the purchaser code generated according to the passport number and the date and time information on the tax exemption card C. Similarly, the reception terminal 50 may include a random number generator to generate a unique purchaser code with a random number to issue the tax exemption sheet S on which the barcode of the purchaser code is printed.

Further, in the foregoing embodiment, in the settlement terminal 60, the money dispensing machine 63 is connected with the external device interface 612, and the cash equivalent to the amount of refund is automatically dispensed from the money dispensing machine 63. With regard to this point, a non-tourist operates the money dispensing machine 63 and the cash equivalent to the amount of refund may be dispensed from the money dispensing machine 63. In other words, in the processing in Act 44 of Fig. 11, the CPU 601 of the settlement terminal 60 generates print data of a refund receipt 8 with a layout, for example, shown in Fig. 15. A barcode 81 recorded on the refund receipt 8 represents an amount of refund. The CPU 601 notifies the printer interface 509 to output the print data to the printer 51. After receiving the notification, the printer interface 509 outputs the print data to the printer 51. As a result, the printer 51 prints the refund receipt 8 to issue it. The issued refund receipt 8 is handed over to the nonresident from the person in charge of the job at the procedure counter 6. The nonresident goes to the location at which the money dispensing machine 63 is arranged and scans the barcode 81 on the refund receipt 8 with a scanner connected with the money dispensing machine 63. Then, cash equivalent to the amount of refund represented by the barcode 81 is automatically dispensed from the money dispensing machine 63. The computer including the CPU 601 as the main part thereof functions as a second issuing module for issuing a medium on which information for instructing the dispensing of the cash equivalent to the amount of refund is recorded through the cooperation with the printer 51.

Further, in the foregoing embodiment, a function as the storage device is applied to the management server 31; however, the function as the storage device may also be applied to, for example, the reception terminal 50 or the settlement terminal 60 other than the management server 31. For example, in a case in which the function as the storage device is applied to the reception terminal 50, in the first sending module, the CPU 501 sends the tax exemption reception data to the storage device via the system transmission path 511.

Further, in the foregoing embodiment, a case in which the total amount of tax levied on the taxable commodities is refunded is described; however, even a case in which a part of the amount of tax is refunded is applicable by changing a calculation method of the amount of refund. Further, it is needless to say that the amount of the tax exemption point serving as a reference amount of the tax exemption is not limited to the reference amount in the embodiment.

Further, the transfer of the POS terminal 40, the reception terminal 50 and the settlement terminal 60 is generally carried out in a state in which a program such as a control program is stored in the ROM. However, the present embodiment is not limited to this and the control program transferred separately from a computer device may be written into a writable storage device included in the computer device according to an operation of a user. The transfer of the control program is recorded in a removable recording medium or can be carried out by communication via a network. If the recording medium like a CD-ROM, a memory card and the like can store the program and can be read by a device, the form thereof is not limited. Furthermore, functions obtained by installation or downloading of the program may be realized through the cooperation with an OS (Operating System) inside the device.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A tax exemption processing system, comprising: a reception device, a settlement apparatus, a checkout device and a storage device, wherein
the reception device includes:
a first reception module configured to receive information recorded in a certificate for certifying that a purchaser who purchases commodity is subject to a tax exemption;
a first generation module configured to generate a tax exemption reception data in which the information recorded in the certificate received by the first receiving module is associated with a purchaser code for identifying the purchaser; and
a first sending module configured to send the tax exemption reception data to the storage device;
the checkout device includes:
a second reception module configured to receive the purchaser code of the purchaser;
a second generation module configured to generate a tax exemption purchase data in which information relating to sales of the commodity purchased by the purchaser is associated with the purchaser code received by the second reception module; and
a second sending module configured to send the tax exemption purchase data to the storage device;
the storage device includes:
a first storage module configured to create a purchaser data file in which the purchaser code contained in the tax exemption reception data is set in response to the reception of the tax exemption reception data to store the information recorded in the certificate contained in the tax exemption reception data in the purchaser data file; and
a second storage module configured to store the information relating to the sales of the commodity contained in the tax exemption purchase data in the purchaser data file in which the purchaser code contained in the tax exemption purchase data is set in response to the reception of the tax exemption purchase data; and
the settlement apparatus includes:
a third reception module configured to receive the purchaser code of the purchaser who receives a refund on purchase of the commodity;
a determination module configured to access the storage device to determine whether or not a purchase total amount of taxable commodity purchased by the purchaser identified with the purchaser code is subject to the tax exemption on the basis of the information relating to the sales of the commodity stored in the purchaser data file in which the purchaser code received by the third reception module is set;
a display module configured to display an amount of tax levied on the taxable commodity on a display device as an amount of refund if the determination module determines that the purchase total amount is subject to the tax exemption; and
a creation module configured to create a document necessary for a tax exemption measure on the basis of the information recorded in the certificate stored in the purchaser data file in which the purchaser code received by the third reception module is set if the determination module determines that the purchase total amount is subject to the tax exemption.

2. The tax exemption processing system according to claim 1, wherein
the reception device further includes a fourth reception module configured to receive the purchaser code recorded in a card medium; and
the first generation module generates a tax exemption reception data in which the information recorded in the certificate received by the first reception module is associated with the purchaser code received by the fourth reception module.

3. The tax exemption processing system according to claim 1 or 2, wherein
the reception device further includes a third generation module configured to generate the purchaser code according to the information recorded in the certificate received by the first reception module and a first issuing module configured to issue a sheet on which the purchaser code generated by the third generation module is printed.

4. The tax exemption processing system according to any one of claims 1 to 3, wherein
the settlement apparatus further includes an instruction module configured to instruct the money dispensing machine to dispense cash equivalent to the amount of refund.

5. The tax exemption processing system according to any one of claims 1 to 4, wherein
the settlement apparatus further includes a second issuing module configured to issue a medium on which information for instructing the money dispensing machine to dispense the cash equivalent to the amount of refund is recorded.

6. A management server, comprising:
a first storage module configured to, in response to the reception of a tax exemption reception data in which information recorded in a certificate for certifying that a purchaser who purchases a commodity is subject to a tax exemption is associated with a unique purchaser code for identifying the purchaser, create a purchaser data file in which the purchaser code contained in the tax exemption reception data is set to store information, recorded in the certificate, which is contained in the tax exemption reception data in the purchaser data file; and
a second storage module configured to, in response to the reception of a tax exemption purchase data in which information relating to sales of the commodity purchased by the purchaser is associated with the purchaser code of the purchaser, store the information, relating to the sales of the commodity, which is contained in the tax exemption purchase data in the purchaser data file in which the purchaser code contained in the tax exemption purchase data is set.

7. A settlement apparatus, comprising:
a communication module configured to communicate with a management server that includes a first storage module configured to, in response to the reception of a tax exemption reception data in which information recorded in a certificate for certifying that a purchaser who purchases a commodity is subject to a tax exemption is associated with a unique purchaser code for identifying the purchaser, create a purchaser data file in which the purchaser code contained in the tax exemption reception data is set to store information, recorded in the certificate, which is contained in the tax exemption reception data in the purchaser data file, and a second storage module configured to, in response to the reception of a tax exemption purchase data in which information relating to sales of the commodity purchased by the purchaser is associated with the purchaser code of the purchaser, store the information, relating to the sales of the commodity, which is contained in the tax exemption purchase data in the purchaser data file in which the purchaser code contained in the tax exemption purchase data is set;
a reception module configured to receive the purchaser code of the purchaser who receives a refund on the commodity purchased;
a determination module configured to determine whether or not a purchase total amount of a taxable commodity purchased by the purchaser identified by the purchaser code is subject to a tax exemption on the basis of the information relating to the sales of the commodity stored in the purchaser data file in which the purchaser code received by the reception module is set;
a display module configured to display an amount of tax levied on the taxable commodity on a display device as an amount of refund if the determination module determines that the purchase total amount is subject to the tax exemption; and
a creation module configured to create a document necessary for a tax exemption measure on the basis of the information, recorded in the certificate, which is stored in the purchaser data file in which the purchaser code received by the third reception module is set if the determination module determines that the purchase total amount is subject to the tax exemption.
